# EUROPÄISCHE PATENTSCHRIFT

(11) **EP 3 164 624 B1**
(45) Veröffentlichungstag und Bekanntmachung des Hinweises auf die Patenterteilung: **16.01.2019**
(21) Anmeldenummer: 15736203.9
(22) Anmeldetag: 01.06.2015
(51) Int. Cl.: F16J 15/00, F16J 15/34

(54) **DICHTUNGSANORDNUNG AN EINER PUMPENWELLE**
SEALING ARRANGEMENT ON A PUMP SHAFT
DISPOSITIF D'ÉTANCHÉITÉ SUR UN ARBRE DE POMPE

(30) Priorität: 02.07.2014 DE 202014103019 U
(43) Veröffentlichungstag der Anmeldung: 10.05.2017
(73) Patentinhaber: Brinkmann Pumpen K.H. Brinkmann GmbH & Co. KG, 58791 Werdohl (DE)
(72) Erfinder: HELPERTZ, Markus, 44225 Dortmund (DE); RADERMACHER, Matthias, 42499 Hückeswagen (DE)
(74) Vertreter: Ter Meer Steinmeister & Partner
(86) Internationale Anmeldenummer: PCT/EP2015/062171
(87) Internationale Veröffentlichungsnummer: WO 2016/000890

(56) Entgegenhaltungen:
- WO-A1-99/23433
- DE-A1- 3 544 783

## Beschreibung

Die Erfindung betrifft eine Dichtungsanordnung an einer Pumpenwelle, mit einer längs der Welle angeordneten Drosselstrecke, die einen Hochdruckraum der Pumpe von einer Dichtungskammer trennt, einer zwischen der Dichtungskammer und einer Niederdruckkammer auf der Welle angeordneten Dichtung, einer von der Dichtungskammer nach außen geführten Drosselleckageleitung, und einer von der Niederdruckkammer nach außen geführten Dichtungsleckageleitung.

Bei vielen Pumpen ist es erforderlich, eine Welle die zum Antrieb eines Pumpenelements dient, beispielsweise zum Antrieb einer Schraubenspindel in einer Schraubenspindelpumpe, durch das Innere einer Hochdruckkammer der Pumpe zu führen. Daraus ergibt sich das Erfordernis, die Welle zuverlässig gegen das unter hohem Druck stehende Medium in der Hochdruckkammer abzudichten.

Bekannte Dichtungsanordnungen dieser Art sind zweistufig aufgebaut, mit der Drosselstrecke als erster Stufe und der eigentlichen Dichtung, beispielsweise einer Gleitringdichtung als zweiter Stufe. Dabei wird ein gewisser Drosselleckagestrom durch die Drosselstrecke hindurch zugelassen, und die über die Drosselstrecke in die Dichtungskammer eintretende Leckflüssigkeit wird über die Drosselleckageleitung nach außen abgeführt. Die Drosselstrecke setzt diesem Leckagestrom jedoch einen so hohen Widerstand entgegen, dass über der Drosselstrecke ein beträchtlicher Druckabfall eintritt und somit eine Druckentlastung der zweiten Dichtungsstufe erreicht wird. An der zweiten Dichtungsstufe treten deshalb im allgemeinen nur noch geringe Leckagen auf. Bei einigen Dichtungstypen, beispielsweise bei einer Gleitringdichtung, ist jedoch auch in dieser zweiten Dichtungsstufe eine gewisse Leckage zu Zwecken der Schmierung erforderlich. Die austretende Menge an Leckageflüssigkeit ist im allgemeinen so gering, dass man sie einfach abtropfen lassen kann. In einigen Fällen ist es jedoch erwünscht, auch diese geringe Menge an Leckageflüssigkeit sauber abzuführen. Diesem Zweck dient die Dichtungsleckageleitung, die an die Niederdruckkammer angeschlossen ist (DE-A-3544783)

Da die Drosselkammer auf der Niederdruckseite durch die Gleitringdichtung im wesentlichen dicht verschlossen ist, kann in der Drosselleckageleitung ein gewisser Gegendruck toleriert werden. Für die Dichtungsleckageleitung ist ein solcher Gegendruck jedoch nicht zulässig, da die Niederdruckkammer auf der Außenseite im allgemeinen nur durch ein nicht fluiddichtes Lager für die Welle abgeschlossen ist, so dass ein Gegendruck hier unmittelbar zu einer Leckage durch das Lager hindurch führen würde. Aus diesem Grund ist es nicht ohne weiteres möglich, die Niederdruckkammer einfach durch ein kurzes Leitungsstück mit der Drosselleckageleitung zu verbinden, um beide Leckageströme über eine gemeinsame Leitung abzuführen. Es ist somit notwendig, zwei separate Leckageleitungen zu verlegen, was zu einem erhöhten Installationsaufwand führt.

Aufgabe der Erfindung ist es, eine Dichtungsanordnung zu schaffen, die eine zuverlässige Ableitung der Leckageströme bei geringerem Installationsaufwand ermöglicht, Diese Aufgabe wird erfindungsgemäß dadurch gelöst, dass ein Abschnitt der Dichtungsleckageleitung durch das Innere der Drosselleckageleitung verläuft.

Diese Lösung hat zunächst den Vorteil, dass das Verlegen der Drosselleckageleitung und auch des größten Teils der Dichtungsleckageleitung in einem Arbeitsvorgang erfolgen kann und somit die Installationsarbeiten rationalisiert werden. Außerdem wird durch die Verminderung der Anzahl der von außen sichtbaren Leitungen das Erscheinungsbild der Pumpe verbessert. Ein weiterer wesentlicher Vorteil besteht darin, dass die Auslassöffnung der Dichtungsleckageleitung, die im Inneren der Drosselleckageleitung verläuft, relativ weit stromabwärts in dieser Drosselleckageleitung liegen kann, so dass es aufgrund der Strömung in der Drosselleckageleitung zu einem Strahlpumpeneffekt kommt, der nicht nur einen Gegendruck in der Dichtungsleckageleitung zuverlässig verhindert, sondern im Gegenteil sogar einen gewissen Sog erzeugt, der ein zuverlässiges Abführen des Leckagestroms aus der Niederdruckkammer sicherstellt.

Vorteilhafte Ausgestaltungen und Weiterbildungen der Erfindung ergeben sich aus den Unteransprüchen.

In einer vorteilhaften Ausführungsform werden die Drosselleckageleitung und vorzugsweise auch die Dichtungsleckageleitung durch flexible Schläuche gebildet, wobei der Außendurchmesser des Schlauches, der die Dichtungsleckageleitung bildet, deutlich kleiner ist als der Innendurchmessers des Schlauches, der die Drosselleckageleitung bildet. Der Schlauch der Drosselleckageleitung kann dann nach Bedarf verlegt werden, beispielsweise längs der Außenseite der Pumpe zu einem drucklosen Tank oder einem Sumpf am Fuß der Pumpe, und der Schlauch der Dichtungsleckageleitung wird problemlos allen Biegungen der Drosselleckageleitung folgen.

Die Länge der Schläuche wird vorzugsweise so gewählt, dass die Auslassöffnung der Dichtungsleckageleitung ein wenig stromaufwärts der Auslassöffnung der Drosselleckageleitung liegt. Dadurch ist sichergestellt, dass das Medium an der Mündung der Dichtungsleckageleitung praktisch drucklos ist, aber der Drosselleckagestrom noch eine gewisse Strömungsgeschwindigkeit hat, die den erwähnten Strahlpumpeneffekt bewirkt.

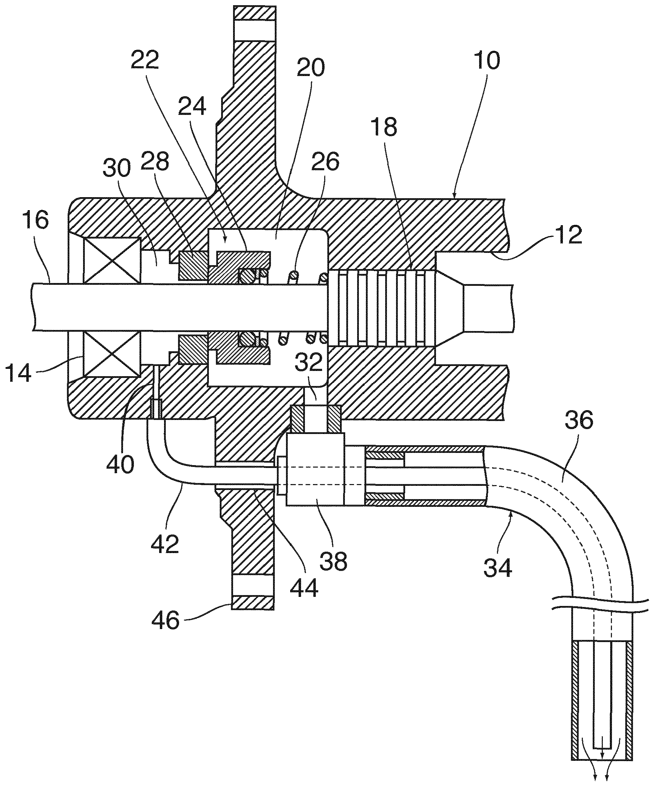

Im folgenden wird ein Ausführungsbeispiel anhand der Zeichnung näher erläutert.

Die einzige Zeichnungsfigur zeigt eine Schnittdarstellung eines Teils eines Pumpengehäuses mit einer erfindungsgemäßen Dichtungsanordnung für eine Pumpenwelle.

In der Zeichnung ist in einem axialen Schnitt ein Teil eines Pumpengehäuses gezeigt, beispielsweise eines Gehäuses 10 einer Schraubenspindelpumpe, das eine Hochdruckkammer 12 bildet und in dem mit Hilfe eines Lagers 14 eine Welle 16 gelagert ist, die durch das Innere der Hochdruckkammer 12 verläuft. Zum Beispiel schließt sich an das in der Zeichnung rechte Ende der Welle 16 koaxial eine Schraubenspindel an, während das in der Zeichnung linke Ende mit einem nicht gezeigten Antriebsmotor verbunden ist.

In einem an die Hochdruckkammer 12 angrenzenden Abschnitt verläuft die Welle 16 durch eine Drosselstrecke 18, in der die Welle 16 mehrere kolbenringartige Verdickungen bildet, die mit der umgebenden Wand des Gehäuses 10 mehrere schmale Ringspalte bildet. Auf der der Hochdruckkammer 12 entgegengesetzten Seite der Drosselstrecke 18 verläuft die Welle 16 durch eine Dichtungskammer 20, in der eine Gleitringdichtung 22 angeordnet ist.

Die Gleitringdichtung 22 weist einen Gleitring 24 auf, der sich mit der Welle 16 mitdreht und durch eine Feder 26 gegen einen stationären Gegenring 28 gespannt wird, der sich seinerseits in axialer Richtung an der Wand des Gehäuses 10 abstützt. Zwischen dem Gegenring 28 und dem Lager 14 ist eine Niederdruckkammer 30 gebildet, die, da das Lager 14 nicht fluiddicht ist, praktisch unter Atmosphärendruck steht.

Das von der Pumpe geförderte Fluid steht in der Hochdruckkammer 12 unter einem verhältnismäßig hohen Druck, nämlich dem Ausgangsdruck der Pumpe. Ein Teil dieses Fluids wird deshalb über die Drosselstrecke 18 in die Dichtungskammer 20 übertreten, wobei jedoch die Drosselstrecke als Labyrinth wirkt, das den Strömungswiderstand beträchtlich erhöht, so dass über der Drosselstrecke ein beträchtlicher Druckabfall eintritt und folglich die Gleitringdichtung 22 in der Dichtungskammer 20 nur einem wesentlich geringeren Druck ausgesetzt ist. Der über die Drosselstrecke 18 in die Dichtungskammer 20 übertretende Drosselleckagestrom wird durch eine radial in der Umfangswand der Dichtungskammer 20 gebildete Bohrung 32 in eine Drosselleckageleitung 34 abgeleitet. Diese Drosselleckageleitung wird im wesentlichen durch einen flexiblen Schlauch 36 mit relativ großem Durchmesser gebildet, der über ein Fitting 38 an die Bohrung 32 angeschlossen ist und außerhalb des Gehäuses 10 zu einem nicht gezeigten Auffangbehälter für die Leckageflüssigkeit verläuft. Bei diesem Auffangbehälter kann es sich beispielsweise um einen separaten Tank handeln oder auch um einen Pumpeneintritt.

Damit der gewünschte Druckabfall an der Drosselstrecke 18 erreicht wird, ist ein permanenter Drosselleckagestrom durch die Drosselleckageleitung 36 notwendig.

Der Gleitring 24 und der Gegenring 28 der Gleitringdichtung 22 stehen über präzise bearbeitete, ebene Gleitflächen miteinander in Reibberührung und bilden deshalb miteinander einen Spalt mit einer Breite von maximal einigen µm, so dass Leckagen durch die Gleitringrichtung hindurch in die Niederdruckkammer 30 auf ein Minimum begrenzt werden. Falls doch etwas Flüssigkeit in die Niederdruckkammer 30 gelangen sollte, wird diese über eine radiale Bohrung 40 und eine Dichtungsleckageleitung 42 abgeleitet, so dass die Flüssigkeit nicht durch das Lager 14 hindurch nach außen gelangt.

Die Dichtungsleckageleitung 42 wird durch einen dünneren Schlauch gebildet, der über einen Nippel an die Bohrung 40 angeschlossen ist und durch das Fitting 38 sowie durch das Innere des Schlauches 36 bis annähernd zum Ende dieses Schlauches verläuft. Im gezeigten Beispiel verläuft die Dichtungsleckageleitung 42 auch durch eine Bohrung 44 eines an das Gehäuse 10 angeformten Flansches 46, der sich zwischen den radialen Bohrungen 32 und 40 des Gehäuses erstreckt.

Der Außendurchmesser des Schlauches, der die Dichtungsleckageleitung 42 bildet, ist deutlich kleiner als der Innendurchmesser des Schlauches 36, so dass in dem Schlauch 36 ein ringförmiger Kanal mit ausreichendem Querschnitt zur Ableitung des Drosselleckagestroms verbleibt.

An der Mündung des Schlauches 36 kann der Drosselleckagestrom ungehindert in den erwähnten Tank ausfließen, so dass hier praktisch Atmosphärendruck herrscht. Das Fluid umströmt dabei die Mündung der Dichtungsleckageleitung 42, die gegenüber der Mündung des Schlauches 36 geringfügig zurückliegt. Dadurch wird an der Mündung dieser Dichtungsleckageleitung nach dem Strahlpumpenprinzip ein Sog erzeugt, wie in der Zeichnung durch Pfeile symbolisiert wird. Dieser Sog gewährleistet eine zuverlässige Ableitung des Fluids aus der Niederdruckkammer 30.

## Patentansprüche

1. Dichtungsanordnung an einer Pumpenwelle, mit einer längs der Welle (16) angeordneten Drosselstrecke (18), einer zwischen der Dichtungskammer (20) und einer Niederdruckkammer (30) auf der Welle (16) angeordneten Dichtung (22), einer von der Dichtungskammer (20) nach außen geführten Drosselleckageleitung (34) und einer von der Niederdruckkammer (30) nach außen geführten Dichtungsleckageleitung (42), **dadurch gekennzeichnet, dass** die Drosselstrecke (18) einen Hochdruckraum (12) der Pumpe von einer Dichtungskammer (20) trennt und dass ein Abschnitt der Dichtungsleckageleitung (42) durch das Innere der Drosselleckageleitung (34) verläuft.

2. Dichtungsanordnung nach Anspruch 1, bei der der Abschnitt der Drosselleckageleitung (34), durch den die Dichtungsleckageleitung (42) verläuft, durch einen flexiblen Schlauch (36) gebildet wird.

3. Dichtungsanordnung nach Anspruch 1 oder 2, bei der zumindest ein Abschnitt der Dichtungsleckageleitung (42) durch einen flexiblen Schlauch gebildet wird.

4. Dichtungsanordnung nach einem der vorstehenden Ansprüche, bei der sich die Dichtungsleckageleitung (42) innerhalb der Drosselleckageleitung (34) bis in die Nähe eines offenen auslassseitigen Endes der letzteren erstreckt.

5. Dichtungsanordnung nach Anspruch 4, bei der die Mündung der Dichtungsleckageleitung (42) gegenüber der Mündung der Drosselleckageleitung (34) zurückliegt.

## Claims

1. A sealing arrangement for a pump shaft, comprising a restrictor section (18) arranged along the shaft (16), a seal (22) arranged on the shaft (16) between a sealing chamber (20) and a low-pressure chamber (30), a restrictor leakage line (34) leading from the sealing chamber (20) to the exterior, and a seal leakage line (42) leading from the low-pressure chamber (30) to the exterior, **characterized in that** the restrictor section (18) separates a high-pressure chamber (12) of the pump from the sealing chamber (20), and **in that** a section of the seal leakage line (42) runs through the interior of the restrictor leakage line (34).

2. The sealing arrangement according to claim 1, wherein the section of the restrictor leakage line (34) through which the seal leakage line (42) passes is formed by a flexible tube (36).

3. The sealing arrangement according to claim 1 or 2, wherein at least a section of the seal leakage line (42) is formed by a flexible tube.

4. The sealing arrangement according to any of the preceding claims, wherein the seal leakage line (42) extends inside the restrictor leakage line (34) up to a position in proximity to the open downstream end of the restrictor leakage line.

5. The sealing arrangement according to claim 4, wherein the mouth of the seal leakage line (42) retreats relative to the mouth of the restrictor leakage line (34).

## Revendications

1. Dispositif d'étanchéité sur un arbre de pompe, avec un tronçon d'étranglement (18) disposé le long de l'arbre (16), une garniture d'étanchéité (22) disposée entre la chambre de garniture d'étanchéité (20) et une chambre basse pression (30) sur l'arbre (16), une conduite de fuite d'étranglement (34) guidée vers l'extérieur à partir de la chambre de garniture d'étanchéité (20), et une conduite de fuite de garniture (42) guidée vers l'extérieur à partir de la chambre basse pression (30), **caractérisé en ce que** le tronçon d'étranglement (18) opère une séparation entre un espace haute pression (12) de la pompe et une chambre de garniture d'étanchéité (20), et **en ce qu'**un segment de la conduite de fuite de garniture (42) traverse l'intérieur de la conduite de fuite d'étranglement (34).

2. Dispositif d'étanchéité selon la revendication 1, dans lequel le segment de la conduite de fuite d'étranglement (34) qui est traversé par la conduite de fuite de garniture (42) est formé par un tuyau (36) flexible.

3. Dispositif d'étanchéité selon la revendication 1 ou 2, dans lequel au moins un segment de la conduite de fuite de garniture (42) est formé par un tuyau flexible.

4. Dispositif d'étanchéité selon l'une des revendications précédentes, dans lequel la conduite de fuite de garniture (42) s'étend à l'intérieur de la conduite de fuite d'étranglement (34) jusqu'au voisinage d'une extrémité ouverte côté sortie de cette conduite.

5. Dispositif d'étanchéité selon la revendication 4, dans lequel l'embouchure de la conduite de fuite de garniture (42) est en retrait par rapport à l'embouchure de la conduite de fuite d'étranglement (34).
